Europäisches Patentamt

European Patent Office

Office européen des brevets

(11) Veröffentlichungsnummer: **0 535 396 A1**

(12) **EUROPÄISCHE PATENTANMELDUNG**

(21) Anmeldenummer: **92115202.1**

(22) Anmeldetag: **04.09.92**

(51) Int. Cl.5: **H04Q 11/04**

(30) Priorität: **30.09.91 DE 4132552**

(43) Veröffentlichungstag der Anmeldung:
**07.04.93 Patentblatt 93/14**

(84) Benannte Vertragsstaaten:
**CH DE FR GB IT LI SE**

(71) Anmelder: **SIEMENS AKTIENGESELLSCHAFT**
**Wittelsbacherplatz 2**
**W-8000 München 2(DE)**

(72) Erfinder: **Löbig, Norbert, Dr. rer. nat.**
**Im Erlich 79**
**W-6100 Darmstadt 12(DE)**

(54) Verfahren zur Bitfehlerreduktion in digitalen Kommunikationssystemen.

(57) Bei der Durchschaltung von aus mehreren Informationsworten bestehenden Bitströmen in den Koppelfeldern digitaler Kommunikationssysteme treten Bitverfälschungen auf. Die Korrektur dieser Bitfehler bereitet in der Praxis Probleme. Bei gedoppelt ausgeführten, jeweils aktiv geschalteten Koppelfeldhälften wird nach der Durchschaltung nur das korrekt durchgeschaltete Informationswort zum Endteilnehmer weitergeleitet. Ob ein Informationswort korrekt durchgeschaltet wurde, wird nach der Durchschaltung mittels einer kombinierten Paritybitüberprüfung sowie einem bitweisen Vergleich mit dem parallel durchgeschalteten Informationswort festgestellt.

FIG 1

Die Erfindung geht aus von einem Verfahren zur Bitfehlerreduktion in einem digitalen Kommunikationssystem gemäß dem Oberbegriff des Patentanspruchs 1, welches aus der Druckschrift DE 38 21 871 C2 bekannt ist.

Die zur Datenübertragung verwendeten analogen und digitalen Übertragungsverfahren auf Leitungen und Kabeln sind störenden Einflüssen, z.B. elektromagnetischen Feldern ausgesetzt, die die zu übertragenden Informationen verändern, indem z.B. ein oder mehrere Bits während der Übertragung 'umgedreht' werden. Da insbesondere internationale Weitverkehrs-Verbindungen gegenüber Bitfehlern anfällig sind, haben internationale Normierungsgremien - wie z.B. CCITT - Minimalvorgaben für Bitfehlerraten festgelegt. Optische Übertragungsstrecken sind diesen äußeren Einflüssen erheblich weniger unterworfen, so daß die Übertragungssicherheit bei der Verwendung optischer Übertragungsstrecken sehr hoch ist.

Generell setzt sich jede Übertragungsstrecke aus insgesamt zwei Anteilen zusammen:

- ein Anteil betrifft die Übertragung der Informationen über eine physikalische Strecke zwischen zwei Knotenpunkten. Diese Strecken werden zunehmend durch optische Nachrichtenkabel realisiert.
- Ein weiterer Anteil betrifft die Durchschaltung der Informationen in den jeweiligen Knoten, in denen Kommunikationssysteme installiert sind.

Durch die Verwendung optischer Übertragungssysteme ist der potentielle Störeinfluß beim übertragungstechnischen Anteil entscheidend verringert worden; während der Durchschaltevorgänge in den Koppelfeldern der Kommunikationssysteme treten demgegenüber häufig Bitfehler auf.

Aufgrund ihrer zentralen Bedeutung für die Netzknoten sind diese Koppelfelder in der Regel gedoppelt oder dreifach ausgeführt. Dies ermöglicht es, bei Fehlfunktion einer Koppelfeldebene den Bitstrom über eine andere Koppelfeldebene durchzuschalten. Dies gilt insbesondere bei Totalausfall einer Koppelfeldebene.

Problematisch sind jedoch - z.B. durch Alterung einzelner Bauteile hervorgerufene - Bitverfälschungen während der Durchschaltung eines Bitstroms. Solche Fehler können nur schwer analysiert und eliminiert werden, da sie auf die Funktion des Koppelfeldes als Durchschalteeinheit keinerlei Einfluß haben.

Fehlererkennungsverfahren zur Erkennung und Korrektur von Bitfehlern in Koppelfeldern werden z.B. in Form einer Mitlaufüberwachung realisiert. Aus der deutschen Offenlegungsschrift 24 27 668 ist ein solches Verfahren bekannt, in dessen Rahmen vor dem eigentlichen Durchschaltevorgang im Koppelfeld den die Information prägenden Informationsworten pro Kanal ein zusätzliches Paritybit zugefügt wird, wobei ein Informationswort in der Regel aus 8 Bit besteht. Generell repräsentiert ein Paritybit die binäre Quersumme über die einzelnen Bits des entsprechenden Informationsworts oder deren Invertierung. Nach dem Durchschaltevorgang wird erneut die binäre Quersumme des durchgeschalteten Informationswortes ermittelt und mit dem übertragenen Paritybit verglichen. Weichen das mitübertragene und das neu ermittelte Paritybit voneinander ab, so liegt ein Übertragungsfehler vor, der in einem entsprechenden Tabellenspeicher festgehalten wird. Somit lassen sich über bestimmte Zeiträume hinweg Aussagen über den Zustand der entsprechenden Koppelfeldebenen machen. Diese Aussagen sind statistischer Natur; somit kann vorzugsweise jene Koppelfeldebene zur Durchschaltung der Bitströme verwendet werden, die in der Vergangenheit die geringste Bitfehlerrate aufgewiesen hat. Ein vergleichbares Verfahren ist auch aus der deutschen Patentschrift DE 38 21 871 C2 bekannt.

Problematisch bei diesem Verfahren ist jedoch, daß die Verfälschung einer geraden Zahl von Bits eines Informationswortes nicht als Bitfehler erkannt wird, da die ausgangsseitig durchgeführte Paritybildung zum selben Ergebnis führt wie die eingangsseitig durchgeführte Paritybildung. Weiterhin lassen sich bei erkannten Bitfehlern zwar statistische Aussagen über die Güte der Durchschaltung der Informationsworte machen, jedoch der Bitfehler bleibt unkorrigiert und wird somit zum Endteilnehmer weitergeleitet. Diese Vorgehensweise birgt insofern gravierende Mängel, insbesondere auch deshalb, weil sich in weiteren Netzknoten zusätzliche Bitfehler aufaddieren können.

Die der Erfindung zugrundeliegende Aufgabe, die Auswirkung von Bitfehlern in den Koppelfeldern digitaler Kommunikationssysteme möglichst gering zu halten, wird ausgehend vom Oberbegriff des Patentanspruches 1 bzw. 2 erfindungsgemäß durch dessen kennzeichnende Merkmale gelöst.

Die Erfindung ist bei Koppelfeldern, die aus mehr als zweifach ausgeführten, jeweils aktiv geschalteten Koppelfeldebenen bestehen, anwendbar. Wesentlich dabei ist die Aufspaltung eines aus einer Vielzahl von Informationsworten bestehenden Informationsstromes in mehrere, völlig identische Informationsströme sowie eine anschließende parallel durchgeführte Durchschaltung über jede der jeweils aktiv geschalteten Koppelfeldebenen. Dies ermöglicht zum einen eine ausgangsseitige Bewertung der Paritybits eines jeden durchgeschalteten Informationswortes sowie zum anderen einen bitweisen Vergleich aller Informationsworte. Eine derart kombinierte Überprüfung läßt in der Regel eindeutige Rückschlüsse auf eventuell aufgetretene Bitfehler zu und erlaubt die Weiterleitung korrekter Informationsworte zum Endteilnehmer. Dadurch wird eine sehr geringe Fehlerquote in den Netzknoten erreicht, ein Umstand, der bei der Verwendung optischer Übertragungsstrecken zwischen den Netzknoten besonders relevant ist. Für einfache Fehlersituationen erfolgt die Bestimmung des auszugebenden Informationswortes durch bitweise Anwendung des Prinzips des Majoritätsentscheides auf der Grundlage von 3 parallel durchgeschalteten Informationsworten. Spezielle komplexe Fehlersituationen werden hiervon abweichend behandelt. Das Prinzip des Majoritätsentscheids ist in K. Steinbuch: Taschenbuch der Nachrichtenverarbeitung (Springer-Verlag 1962) detailliert beschrieben.

Die Erfindung wird anhand eines figürlich dargestellten Ausführungsbeispiels näher erläutert, wobei von einem dreifach ausgeführten Koppelfeld ausgegangen wird; die Koppelfeldebenen sind jeweils aktiv geschaltet.

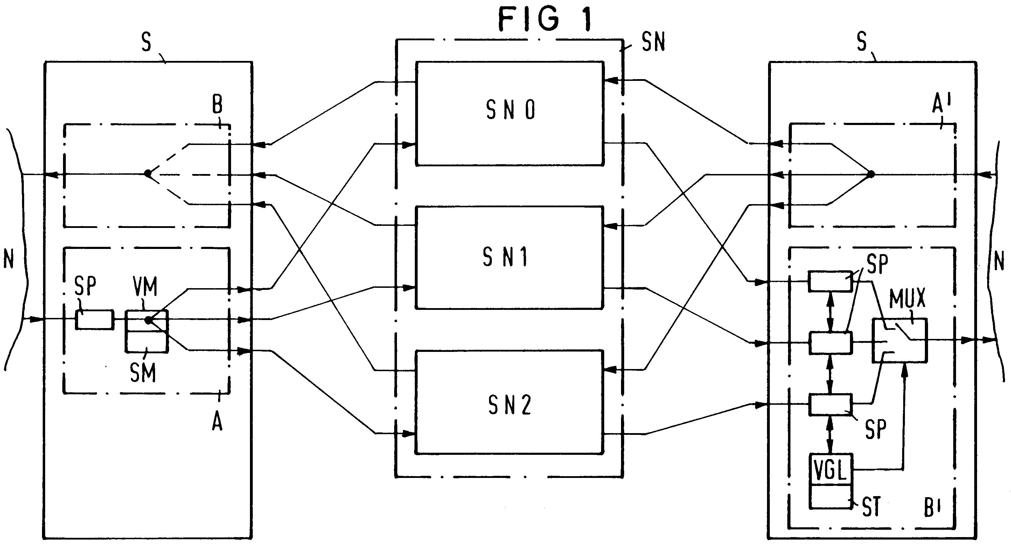

FIG 1 zeigt ein aus 3 Koppelfeldebenen $SN_0$, $SN_1$, $SN_2$ bestehendes Koppelfeld SN eines digitalen Kommunikationssystems. Dabei sind die Koppelfeldebenen $SN_0$, $SN_1$, $SN_2$ über Schnittstellenelemente S mit dem Kommunikationsnetz N verbunden. Die Schnittstellenelemente S enthalten Logikelemente A, A' sowie Logikelemente B, B'.

Die Logikelemente A, A' enthalten Speicherelemente SP, Verteilermodule VM und Steuermodule SM. Ein über das Kommunikationsnetz N ankommendes Informationswort, das im Ausführungsbeispiel 8 Bit groß sein soll, wird in den Speicherelementen SP kurzfrisitig zwischengespeichert. Hier erfolgt die Bildung eines Paritybits. Anschließend wird das Informationswort zusammen mit dem Paritybit über die Verteilermodule VM auf die Koppelfeldebenen $SN_0$, $SN_1$, $SN_2$ aufgespaltet. Dieser Vorgang wird von den Steuermodulen SM gesteuert und überwacht.

Nach dem Durchschaltevorgang über die jeweilige Koppelfeldebene $SN_0$, $SN_1$, $SN_2$ werden in den Logikelementen B, B' die durchgeschalteten Informationsworte auf während des Durchschaltevorgangs eventuell aufgetretene Bitfehler hin untersucht. Sie enthalten zu diesem Zweck Speicherelemente SP, Vergleicherelemente VGL, Steuerelemente ST, sowie Multiplexelemente MUX.

Die Speicherelemente SP führen je eine kurzfristige Zwischenspeicherung der durchgeschalteten Informationsworte durch, anschließend erfolgt eine bitweise Differenzbildung der separat durchgeschalteten Informationsworte durch die Vergleicherelemente VGL sowie eine erneute Paritybildung pro Informationswort und Koppelfeldebene; das Resultat dieser Paritybildung wird pro Koppelfeldebene mit dem mitübertragenen Paritybit verglichen. Dieser Vorgang wird von Steuerelementen ST gesteuert und überwacht.

Zur Bitfehlererkennung werden somit zum einen die über je eine Koppelfeldebene durchgeschalteten Informationsworte bitweise miteinander verglichen sowie zum anderen ein ausgangsseitiger Paritätstest der 3 durchgeschalteten Informationsworte durchgeführt. Das Ergebnis jener Bewertungen wird von statistischen Bewertungsprozeduren f(s) festgehalten. Somit lassen sich zu einem späteren Zeitpunkt (statistische) Aussagen über die Qualität der Durchschaltung über die jeweilige Koppelfeldebene $SN_0$, $SN_1$, $SN_2$ machen.

Folgende Fallgestaltungen sind zu unterscheiden:

1.) Sind die beiden Informationsworte $I^{(x)}$, $I^{(y)}$, die über je zwei Koppelfeldebenen $SN_x$, $SN_y$ geleitet wurden (x = y), gleich, jedoch beide nicht konsistent hinsichtlich der jeweils mitübertragenen Parityinformation und weicht das Informationswort $I^{(z)}$, (z = x, z = y), das über die dritte Koppelfeldebene $SN_z$ geleitet wurde, nur in einem Bit von den beiden Informationsworten ab und ist hinsichtlich seines mitübertragenen Paritybits P konsistent, so wird das Informationswort mit konsistenter Parityinformation in Richtung Endteilnehmer weitergeleitet.

2.) Unterscheiden sich die beiden hinsichtlich ihrer jeweils mitübertragenen Parityinformationen konsistenten Informationsworte $I^{(x)}$, $I^{(y)}$, (x = y), die über die zwei Koppelfeldebenen $SN_x$, $SN_y$ geleitet wurden, in genau zwei Bits und ist das hinsichtlich seiner mitübetragenen Paritätsinformation P inkonsistente jedoch mit gleicher Paritätsinformation P versehene Informationswort $I^{(z)}$ (z = x, z = y), das über die Koppelfeldebene $SN_z$ geleitet wurde, in genau jeweils einer diesen beiden Bitpositionen unterschiedlich zu $I^{(x)}$ und $I^{(y)}$, dann erfolgt die Weiterleitung des Informationswortes $I^{(x)}$ oder $I^{(y)}$ zum Endteilnehmer in Abhängigkeit von der statistischen Bewertungsprozedur f(s).

3.) Unterscheiden sich die beiden hinsichtlich ihrer jeweils mitübertragenen Parityinformation P konsistenten Informationsworte $I^{(x)}$, $I^{(y)}$ (x = y), die über die Koppelfeldebenen $SN_x$, $SN_y$ geleitet wurden, in genau einem Bit, und ist das hinsichtlich seiner mitübertragenen Parityinformation P inkonsistente Informationswort $I^{(z)}$ (z = x, z = y), das über die Koppelfeldebene $SN_z$ geleitet wurde, identisch mit $I^{(x)}$ oder $I^{(y)}$, so erfolgt die Weiterleitung des Informationswortes $I^{(x)}$ oder $I^{(y)}$ zum Endteilnehmer in Abhängigkeit von der statistischen Bewertungsprozedur f(s).

4.) In allen anderen Fällen wird das auszugebende Informationswort bitweise nach dem Prinzip des Majoritätsentscheid aus den 3 Informationsworten $I^{(x)}$, $I^{(y)}$, $I^{(z)}$ (x $\neq$ y $\neq$ x) gebildet und in Richtung Endteilnehmer weitergeleitet.

Die Bewertungsprozeduren f(s) führen statistische Daten über die Qualität der Durchschaltevorgänge der drei Koppelfeldebenen $SN_0$, $SN_1$, $SN_2$. Diese statistischen Daten werden im Falle erkannter und eindeutig zuordenbarer Bitfehler aktualisiert. Somit wird im Zweifelsfall das Informationswort derjenigen Koppelfeldebene in Richtung Endteilnehmer weitergeleitet, die in der Vergangenheit die geringste Bitfehlerrate aufgewiesen hat. Eine besonders einfache Ausgestaltung der Erfindung liegt darin, daß nur die unter Punkt 1.) und 4.) genannten Fallgestaltungen berücksichtigt werden; dies bedeutet, daß keine statische Funktion f(s) definiert ist.

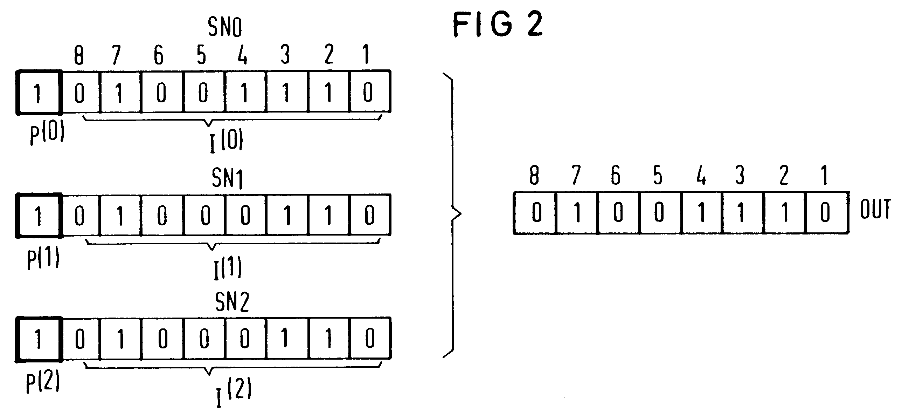

In den in FIG 2, FIG 3, FIG 4 dargestellten Ausführungsbeispielen wird davon ausgegangen, daß das Informationswort die Länge 8 Bit besitzt und mit der invertierten binären Quersumme als Prüfinformation gesichert ist.

Im in FIG 2 dargestellten Ausführungsbeispiel wird davon ausgegangen, daß jeweils Bit 4 der über die Koppelfeldebenen $SN_1$ und $SN_2$ geleiteten Informationsworte $I^{(1)}$ und $I^{(2)}$ verfälscht wurde. Nach dem erfindungsgemäßen Verfahren wird das Informationswort $I^{(o)}$ weitergeleitet, da hier Paritykonsistenz vorhanden ist. Zwar stimmen die Informationsworte $I^{(1)}$, $I^{(2)}$ überein, beide sind allerdings inkonsistent hinsichtlich ihrer mitübertragenen Parityinformation P.

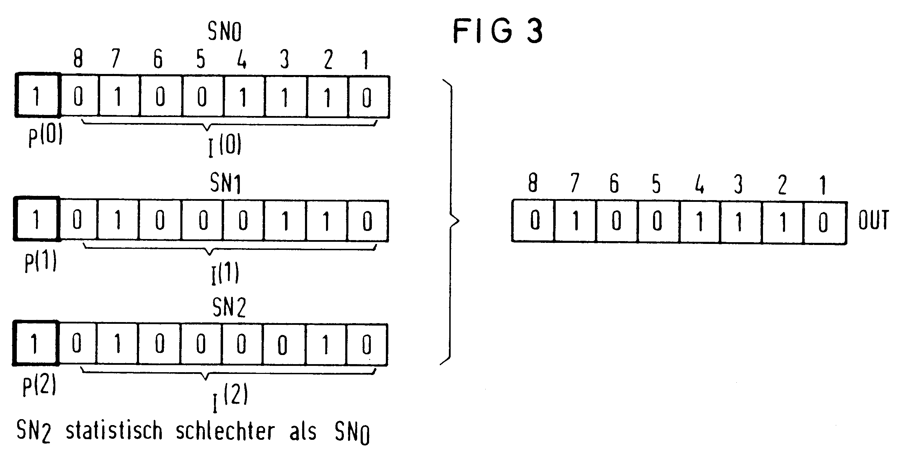

Im in FIG 3 dargestellten Ausführungsbeispiel wird davon ausgegangen, daß Bit 4 der über die Koppelfeldebenen $SN_1$ und $SN_2$ geleiteten Informationsworte $I^{(1)}$ und $I^{(2)}$ verfälscht wurde, zusätzlich jedoch auch Bit 3 des Informationswortes $I^{(2)}$, wodurch $I^{(2)}$ konsistent hinsichtlich seiner mitübertragenen Parityinformation bleibt. Nach dem erfindungsgemäßen Verfahren erfolgt die Weiterleitung eines der hinsichtlich ihrer mitübertragenen Parityinformation P konsistenten Informationsworte $I^{(o)}$ oder $I^{(2)}$ in Abhängigkeit der statistischen Bewertungsprozeduren f(s). War insbesondere die Bitfehlerrate der Koppelfeldebene $SN_2$ in der betrachteten Vergangenheit größer als die der Koppelfeldebene $SN_0$, so erfolgt die Ausgabe des Informationswortes $I^{(o)}$ in Richtung Endteilnehmer.

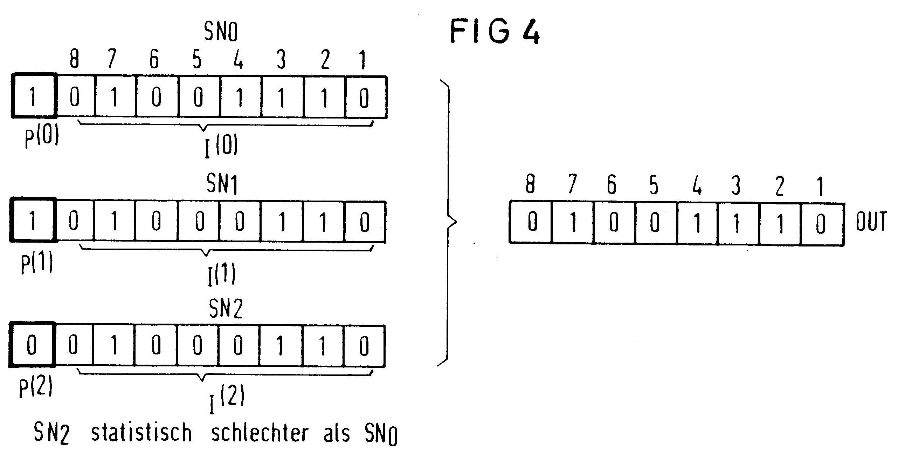

Im in FIG 4 dargestellten Ausführungsbeispiel wird davon ausgegangen, daß jeweils Bit 4 der über die Koppelfeldebenen $SN_1$ und $SN_2$ geleiteten Informationsworte $I^{(1)}$ und $I^{(2)}$ verfälscht wurde, zusätzlich jedoch auch das zu $I^{(2)}$ gehörige, mitübertragene Paritätsbit $P^{(2)}$, wodurch $I^{(2)}$ konsistent hinsichtlich seiner mitübertragenen Paritätsinformation bleibt. Nach dem erfindungsgemäßen Verfahren erfolgt die Weiterleitung eines der hinsichtlich ihrer mitübertragenen Parityinformation konsistenten Informationsworte $I^{(o)}$ oder $I^{(2)}$ in Abhängigkeit von der statistischen Bewertungsprozedur f(s). War insbesondere die Bitfehlerrate der Koppelfeldebenen

$SN_2$ in der betrachteten Vergangenheit größer als die der Koppelfeldebene $SN_0$, so erfolgt die Ausgabe des Informationswortes $I^{(o)}$ in Richtung Endteilnehmer.

Das erfindungsgemäße Verfahren ist in der Lage, Einfachfehler in dem Tripel der Informationsworte $I^{(o)}$, $I^{(1)}$, $I^{(2)}$ sicher zu korrigieren, da dies Eigenschaft des Prinzips des Majoritätsentscheides ist, welcher in solchen Fehlersituationen zur Anwendung kommt (vgl. Verfahrensbeschreibung Punkt 4).

Aufgrund des Majoritätsentscheides in Verbindung mit Punkt 1) der Verfahrensbeschreibung lassen sich Doppelfehler in dem Tripel der Informationsworte $I^{(o)}$, $I^{(1)}$, $I^{(2)}$ ebenfalls sicher korrigieren. Hierdurch ergibt sich eine wesentliche Reduktion der in Richtung Endteilnehmer ausgegebenen Bitfehler, welche durch ausschließliche Verwendung des Prinzips des Majoritätsentscheides nicht erreichbar wäre.

Ebenfalls aufgrund des Majoritätsentscheides werden Dreifachfehler in dem Tripel der Informationsworte $I^{(o)}$, $I^{(1)}$, $I^{(2)}$, welche unterschiedliche Bitpositionen betreffen, sicher korrigiert. Ist das jeweils gleiche Bit aller 3 Informationsworte $I^{(o)}$, $I^{(1)}$, $I^{(2)}$ verfälscht, so erfolgt jedoch eine Falschausgabe. Bleibt aber im Falle eines Dreifachfehlers ein Informationswort unversehrt, so kann trotz der gleichzeitigen Verfälschung desselben Bits der beiden weiteren Informationsworte durch Zuhilfenahme der statistischen Bewertungsprozeduren f(s) gemäß Punkt 2.) und 3.) der Verfahrensbeschreibung das wahrscheinlich korrekte Informationswort ausgegeben werden. Dies gestattet die weitere Reduzierung der zum Endteilnehmer ausgegebenen Bitfehler, insbesondere im Fall von Koppelfeldebenen mit stark unterschiedlicher Durchschaltungsqualität.

Die Logikelemente A, A', B, B' können vorzugsweise in einem hoch integrierten Baustein - ASIC-Baustein - implementiert sein. Solche Bausteine werden heute vielfältig eingesetzt; durch die Verwendung derartiger Bausteine wird auch sichergestellt, daß die bei der Abspeicherung und Bewertung der Informationsworte entstehenden Verzögerungszeiten minimiert werden und für die praktischen Überlegungen vernachlässigt werden können.

**Patentansprüche**

1. Verfahren zur Bitfehlerreduktion in digitalen Kommunikationssystemen mit einem aus drei Koppelfeldebenen ($SN_1$, $SN_1$, $SN_2$) bestehenden Koppelfeld (SN), das über Schnittstellenelemente (S) in ein Kommunikationsnetz (N) eingebunden ist, wobei die Schnittstellenelemente (S)

- erste Elemente (A, A') enthalten, die über das Kommunikationsnetz (N) herangeführte, aus mehreren Bits (I...M) bestehende Informationsworte ($I^{(o)}...I^{(N)}$) vor dem Durchschaltevorgang mit jeweils einer, aus einer über die Bits (I...M) der Informationsworte ($I^{(o)}...I^{(N)}$) gebildeten aus wenigstens einem Bit bestehenden Prüfinformation (P) versehen, und
- zweite Elemente (B', B) enthalten, die nach dem Durchschaltevorgang erneut eine aus wenigstens einem Bit bestehende weitere Prüfinformation (P) über die Bits (I...M) der durchgeschalteten Informationsworte ($I^{(o)}...I^{(N)}$) bilden und das Resultat mit der mitübertragenen Prüfinformation (P) vergleichen, und

eine Bewertungsprozedur (f(s)) vorgesehen ist, die aus einer Prüfinformationsbewertung statistische Daten über die Qualität der Durchschaltung gewinnt,

**dadurch gekennzeichnet,**

daß die ersten Elemente (A, A') das ankommende Informationswort, ergänzt durch die Prüfinformation (P) spiegelbildlich aufspalten und über jede Koppelfeldebene ($SN_0$, $SN_1$, $SN_2$) weiterleiten und die zweiten Elemente (B, B') jedes der durchgeschalteten Informationsworte bitweise miteinander vergleichen und entweder dasjenige Informationswort zum Endteilnehmer weiterleiten,

- das sich von den beiden anderen Informationsworten, die zum einen ihrerseits übereinstimmen, aber zum anderen inkonsistent hinsichtlich ihrer Prüfinformation (P) sind, nur in einem Bit unterscheidet, aber hinsichtlich seiner eigenen Prüfinformation (P) Konsistenz aufweist,
- oder das sich in Abhängigkeit von der statistischen Bewertungsprozedur f(s) aus den beiden hinsichtlich ihrer mitübertragenen Prüfinformation (P) konsistenten Informationsworten ergibt, falls diese sich in genau zwei Bitpositionen unterscheiden und sich das über die weitere Koppelfeldebene übertragene Informationswort in genau jeweils einer dieser beiden Bitpositionen von diesen unterscheidet, selbst jedoch hinsichtlich seiner mitübertragenen Prüfinformation (P) inkonsistent ist,
- oder das sich in Abhängigkeit von der statistischen Bewertungsprozedur f(s) aus den beiden hinsichtlich ihrer mitübertragenen Prüfinformation (P) konsistenten Informationsworten ergibt, falls diese sich in genau einer Bitposition unterscheiden und das über die weitere Koppelfeldebene übertragene Informationswort mit einem dieser Informationsworte identisch ist, selbst jedoch hinsichtlich seiner mitübertragenen Prüfinformation (P) inkonsistent ist,

- oder bei Nichterfülltsein aller 3 voranstehend genannten Fälle dasjenige Informationswort zum Endteilnehmer weiterleiten,

das sich aufgrund eines bitweise durchzuführenden Majoritätsentscheides aus den drei durchgeschalteten Informationsworten ergibt.

2. Verfahren zur Bitfehlerreduktion in digitalen Kommunikationssystemen mit einem aus drei Koppelfeldebenen ($SN_0$, $SN_1$, $SN_2$) bestehenden Koppelfeld (SN), das über Schnittstellenelemente (S) in ein Kommunikationsnetz (N) eingebunden ist, wobei die Schnittstellenelemente (S)

- erste Elemente (A, A') enthalten, die über das Kommunikationsnetz (N) herangeführte, aus mehreren Bits (I...M) bestehende Informationsworte ($I^{(o)}...I^{(N)}$) vor dem Durchschaltevorgang mit jeweils einer, aus einer über die Bits (I...M) der Informationsworte ($I^{(o)}...I^{(N)}$) gebildeten, aus wenigstens einem Bit bestehenden Prüfinformation (OP) versehen, und
- zweite Elemente (B', B) enthalten, die nach dem Durchschaltevorgang erneut eine aus wenigstens einem Bit bestehende weitere Prüfinformation (P) über die Bits (I...M) der durchgeschalteten Informationsworte ($I^{(o)}...I^{(N)}$) bilden und das Resultat mit der mitübertragenen Prüfinformation (P) vergleichen, und

eine Bewertungsprozedur (f(s)) vorgesehen ist, die aus einer Prüfinformationsbewertung statistische Daten über die Qualität der Durchschaltung gewinnt,

**dadurch gekennzeichnet,**

daß die ersten Elemente (A, A') das ankommende Informationswort, ergänzt durch die Prüfinformation (P) spiegelbildlich aufspalten und über jede Koppelfeldebene ($SN_0$, $SN_1$, $SN_2$) weiterleiten und die zweiten Elemente (B, B') jedes der durchgeschalteten Informationsworte bitweise miteinander vergleichen und entweder dasjenige Informationswort zum Endteilnehmer weiterleiten,

- das sich von den beiden anderen Informationsworten, die zum einen ihrerseits übereinstimmen, aber zum anderen inkonsistent hinsichtlich ihrer Prüfinformation (P) sind, nur in einem Bit unterscheidet, aber hinsichtlich seiner eigenen Prüfinformation (P) Konsistenz aufweist,
- oder bei Nichterfüllen der voranstehend genannten Bedingungen dasjenige Informationswort zum Endteilnehmer weiterleiten, das sich aufgrund eines bitweise durchzuführenden Majoritätsentscheides aus den drei durchgeschalteten Informationsworten ergibt.

3.  Verfahren nach Anspruch 1 und 2
    **dadurch gekennzeichnet,**
    daß die Prüfinformation (P) die Parität des Informationswortes ist.

4.  Anordnung zur Durchführung des Verfahrens nach Patentanspruch 1, 2 oder 3,
    **dadurch gekennzeichnet,**
    daß die ersten Elemente (A, A') erste Logikelemente sind, die aus
    - ersten Speicherelementen (SP)
    - Steuermodule (SM)
    - Verteilermodule (VM) bestehen und
    daß die zweiten Elemente (B, B') zweite Logikelemente sind, die aus
    - zweiten Speicherelementen (SP)
    - Vergleicherelementen (VGL)
    - Steuerelementen (ST)
    - Multiplexelementen (MUX) bestehen.

FIG 1

FIG 2

SN0

| 8 | 7 | 6 | 5 | 4 | 3 | 2 | 1 |

| 1 | 0 | 1 | 0 | 0 | 1 | 1 | 1 | 0 |

P(0) ⏟ I(0)

SN1

| 1 | 0 | 1 | 0 | 0 | 0 | 1 | 1 | 0 |

P(1) ⏟ I(1)

SN2

| 1 | 0 | 1 | 0 | 0 | 0 | 1 | 1 | 0 |

P(2) ⏟ I(2)

| 8 | 7 | 6 | 5 | 4 | 3 | 2 | 1 |

| 0 | 1 | 0 | 0 | 1 | 1 | 1 | 0 | OUT

EP 0 535 396 A1

FIG 3

SN2 statistisch schlechter als SN0

EP 0 535 396 A1

# FIG 4

SN0

| 8 | 7 | 6 | 5 | 4 | 3 | 2 | 1 |
|---|---|---|---|---|---|---|---|

| 1 | 0 | 1 | 0 | 0 | 1 | 1 | 1 | 0 |
|---|---|---|---|---|---|---|---|---|

P(0)   I(0)

SN1

| 1 | 0 | 1 | 0 | 0 | 0 | 1 | 1 | 0 |
|---|---|---|---|---|---|---|---|---|

P(1)   I(1)

SN2

| 0 | 0 | 1 | 0 | 0 | 0 | 1 | 1 | 0 |
|---|---|---|---|---|---|---|---|---|

P(2)   I(2)

SN2  statistisch  schlechter  als  SN0

| 8 | 7 | 6 | 5 | 4 | 3 | 2 | 1 |
|---|---|---|---|---|---|---|---|

| 0 | 1 | 0 | 0 | 1 | 1 | 1 | 0 |
|---|---|---|---|---|---|---|---|

OUT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 325 318 (PHILIPS)<br>* Spalte 2, Zeile 14 - Zeile 35 *<br>* Spalte 2, Zeile 42 - Spalte 5, Zeile 2 *<br>--- | 1,2,4 | H04Q11/04 |
| A | EP-A-0 321 426 (ERICSSON)<br>* Spalte 3, Zeile 21 - Zeile 52 *<br>--- | 1,2,4 | |
| A | EP-A-0 403 451 (ERICSSON)<br>* Spalte 4, Zeile 44 - Spalte 8, Zeile 14 *<br><br>--- | 1,2,4 | |
| A | PATENT ABSTRACTS OF JAPAN<br>vol. 009, no. 123 (E-317)28. Mai 1985<br>& JP-A-60 010 996 ( MATSUSHITA ) 21.<br>Januar 1985<br>* Zusammenfassung *<br>--- | 1,2 | |
| A | EP-A-0 381 104 (ALCATEL)<br>* Gesamtes Dokument *<br>--- | 1-4 | |
| A | WO-A-8 501 410 (WESTERN ELECTRIC)<br>* Seite 3, Zeile 9 - Seite 4, Zeile 29 *<br>* Seite 6, Zeile 37 - Seite 7, Zeile 12 *<br>* Seite 15, Zeile 32 - Seite 16, Zeile 21 *<br><br>* Seite 18, Zeile 11 - Seite 19, Zeile 19 *<br><br>--- | 1-4 | **RECHERCHIERTE SACHGEBIETE (Int. Cl.5 )**<br><br>H04Q<br>H04M |
| A | DE-A-2 718 317 (GEC,PLESSEY,STC)<br>* Seite 5, Zeile 28 - Seite 6, Zeile 19 *<br>* Seite 10, Zeile 8 - Zeile 22 *<br>* Seite 12, Zeile 20 - Seite 14, Zeile 3 *<br>--- | 1-4 | |
| A | WO-A-8 803 738 (ERICSSON)<br>* Seite 11, Zeile 2 - Zeile 9 *<br>* Seite 16, Zeile 24 - Seite 17, Zeile 30 *<br><br><br>----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 16 DEZEMBER 1992 | DE MUYT H.A. |

EPO FORM 1503 03.82 (P0403)